# EUROPEAN PATENT APPLICATION

(11) **EP 4 845 000 A1**
(43) Date of publication of application: **25.11.2026**
(21) Application number: 26176783.4
(22) Date of filing: 06.05.2026
(51) Int. Cl.: H02K 11/40, H02K 7/14, H02K 11/33

(54) **FLUID PUMP**

(30) Priority: 21.05.2025 DE 102025119883
(71) Applicant: VALEO EMBRAYAGES, 80009 Amiens (FR)
(72) Inventor: STOESSEL, Roland, 96106 Ebern (DE); GEGNER, Patrick, 96106 Ebern (DE); SCHNEIDERBANGER, Ralf, 96106 Ebern (DE)
(74) Representative: Valeo Powertrain Systems

(57) **Abstract**

A fluid pump (10) has a motor housing (14), in which a stator (62) is accommodated, and has an electronics housing (24), in which a printed circuit board (26) is accommodated, said printed circuit board being used to actuate stator windings of the stator (62). In this case, the electronics housing (24) has a base (52) on the side facing the stator (62), said base having a receptacle (92) for an earth contact (64) which is connected on one side to an earth conductor on the printed circuit board (26) and on the other side is pushed onto a contact lug (80) provided on the outer side (81) of the stator (62).

## Description

The invention relates to a fluid pump having a motor housing, in which a stator is accommodated, and having an electronics housing, in which a printed circuit board is accommodated, said printed circuit board being used to actuate stator windings of the stator.

Fluid pumps of this type are known.

A challenge with known fluid pumps is to ensure high electromagnetic compatibility (EMC). However, this usually leads to a complex construction of the fluid pump and thus to a high production outlay.

An object of the invention is to provide a fluid pump which has good electromagnetic compatibility and is of simple design.

The object is achieved by a fluid pump having a motor housing, in which a stator is accommodated, and having an electronics housing, in which a printed circuit board is accommodated, said printed circuit board being used to actuate stator windings of the stator. The electronics housing has a base on the side facing the stator. The base has a receptacle for an earth contact which is connected on one side to an earth conductor on the printed circuit board and on the other side is pushed onto a contact lug provided on the outer side of the stator.

It has been recognized according to the invention that in this way the earth contact is reliably connected to the stator and thus effectively suppresses electromagnetic interference fields which impair the electromagnetic compatibility. The fluid pump is thus also of a particularly simple design and can be produced with little outlay.

In this case, the contact lug can be formed in one piece with stator laminations which form the core of the stator. This design has the advantage that the fluid pump is particularly compact and consists of few individual parts.

In addition or as an alternative, two contact lugs arranged next to one another can be provided and the earth contact can engage on one of the two contact lugs. The fluid pump according to this embodiment is of particularly flexible design since the earth contact can be connected to the stator at different positions.

According to one aspect, the side of the earth contact assigned to the stator is of fork-shaped design with two contact limbs which engage on opposite sides of the contact lug in order to permanently ensure effective contact.

In one embodiment, the earth contact has a press-in section which is accommodated in the base of the electronics housing. As a result, the earth contact is arranged in a defined manner in the electronics housing.

In this case, the press-in section can be approximately twice as wide as the section of the earth contact assigned to the stator. This ensures that the earth contact is reliably mounted in the base of the electronics housing.

In addition or as an alternative, a thrust bearing section can be provided on the press-in section and a press-in contact which is accommodated in the printed circuit board can be arranged on the thrust bearing section. The press-in contact reliably establishes a permanent electrical connection between the earth contact and the printed circuit board with little outlay.

In another embodiment, a seal is arranged around the press-in section and bears against the thrust bearing section. This design has the advantage that the receptacle for the earth contact is reliably sealed. By virtue of the fact that the seal bears against the thrust bearing section, the seal can be inserted into the receptacle together with the earth contact during assembly with little outlay. Furthermore, the seal is reliably secured in the receptacle by way of the thrust bearing section.

Provision may also be made for the press-in contact to be arranged on a side edge of the thrust bearing section. This design facilitates the existing installation space being used particularly effectively.

According to one embodiment, the electronics housing is potted in order to protect the printed circuit board and permanently ensure a defined arrangement of the printed circuit board in the electronics housing.

Further advantages and features will become apparent from the following description and from the appended drawings. In said drawings:
- Figure 1 shows a fluid pump according to the invention in a plan view,
- Figure 2 shows the fluid pump in a sectional view along the line II - II in Figure 1,
- Figure 3 shows the fluid pump in a sectional view along the plane III - III in Figure 1,
- Figure 4 shows the fluid pump in a sectional view along the plane IV - IV in Figure 3,
- Figure 5 shows a detailed view of a press-in section of an earth contact of the fluid pump from Figure 3,
- Figure 6 shows a detailed view of another section of the earth contact of the fluid pump from Figure 3, and
- Figure 7 shows a sectional view of the fluid pump along the plane VII - VII in Figure 3.

The detailed description below in combination with the appended drawings, in which the same numerals refer to identical elements, is intended as a description of various embodiments of the disclosed subject matter, and is not supposed to represent the individual embodiments. Each embodiment described in this disclosure is used purely as an example or illustration and should not be interpreted as preferred or advantageous relative to other embodiments.

All the features disclosed below with reference to the exemplary embodiments and/or the accompanying figures can be combined singly or in any desired subcombination with features of the aspects of the present disclosure, including features of preferred embodiments, provided that the resulting combination of features is worthwhile for a person skilled in the art.

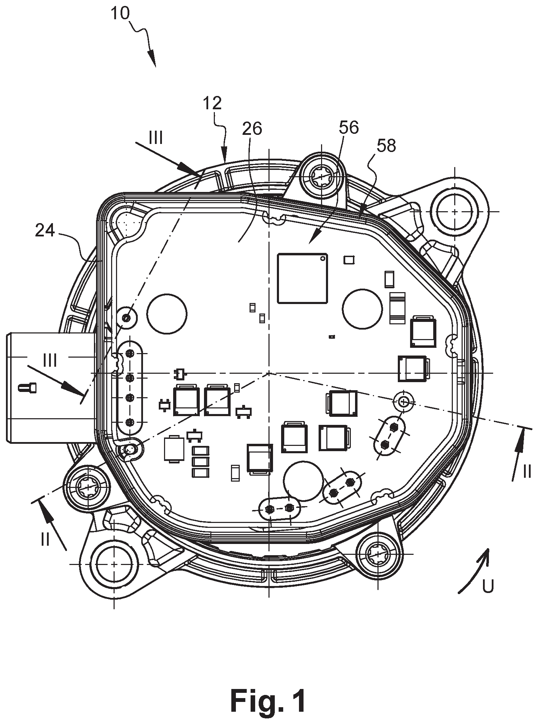

Figure 1 shows a fluid pump 10.

The fluid pump 10 is, for example, set up to provide a hydraulic oil flow for a drive train of a motor vehicle. The said hydraulic oil flow can be used to lubricate or cool parts of the drive train. The hydraulic oil flow can also be provided for conversion, in actuators, into an actuating stroke, for example in order to shift a clutch.

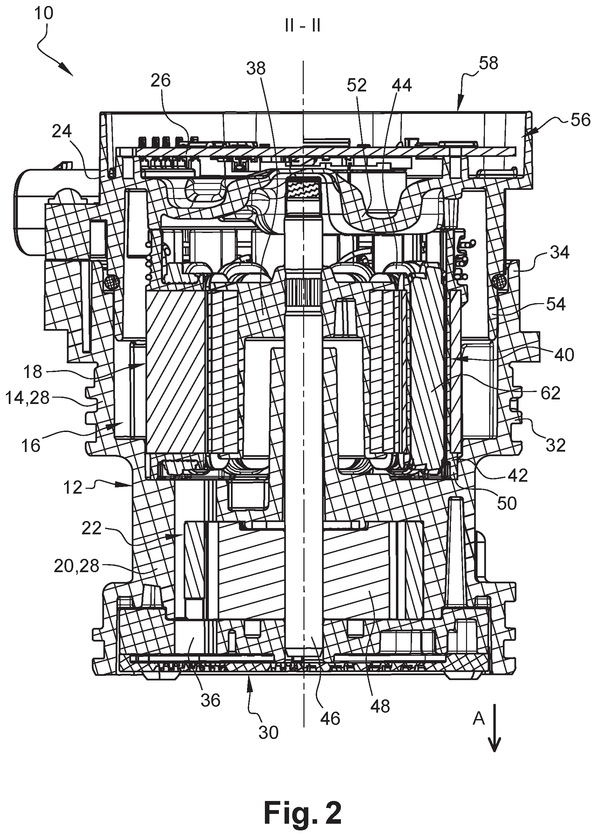

In the embodiment illustrated, the fluid pump 10 has a housing 12 having a motor housing 14 (see Figure 2), in the interior space 16 of which an electric motor 18 is arranged, a pump housing 20, in which a pump module 22 is accommodated, and an electronics housing 24, in which a printed circuit board 26 is arranged.

The housing 12 furthermore has a housing base 30 which axially delimits the pump module 22.

The motor housing 14 and the pump housing 20 are formed here as a one-piece housing section 28 having a side wall 32 which extends substantially in the shape of a hollow cylinder counter to the axial direction A from the housing base 30 to a housing edge 34.

The housing section 28 and the electronics housing 24 are, for example, injection-moulded components made of plastic.

The pump housing 20 has a plurality of fluid inlets or outlets 36, for example in the housing base 30, by way of which fluid is sucked in or discharged by the pump module 22 during operation.

In an alternative embodiment, the motor housing 14 and the pump housing 20 are formed by separate housing parts which are connected to one another.

The electric motor 18 has a rotor 38 and also a stator module 40 with a support 42 and stator windings 44.

The support 42 consists of plastic and here forms a slot insulation, to which the stator windings 44 are attached.

In this context, the stator module 40 is arranged in a stationary manner in the housing 12, and the rotor 38 is connected in terms of drive via a shaft 46 to the pump module 22, for example to a pump rotor 48 of the pump module 22.

At its end 50 facing the pump module 22, the support 42 is fastened to the motor housing 14, for example in a materially bonded manner.

Arranged on the motor housing 14 axially opposite from the pump housing 20 is the electronics housing 24, which forms a cover that closes the interior space 16.

For this purpose, the electronics housing 24 has a base 52 which extends perpendicularly to the axial direction A.

The electronics housing 24 is fastened to the motor housing 14 by way of a fastening section 54 facing the electric motor 18, for example in a materially bonded manner.

The printed circuit board 26 accommodated in the interior 56 of the electronics housing 24 is set up to actuate the electric motor 18 and, for this purpose, is connected to the latter in a signal-transmitting manner.

Axially opposite from the motor housing 14, the electronics housing 24 has an opening 58, by way of which the printed circuit board 26 can be inserted in the axial direction A into the interior 56 of the electronics housing 24 during assembly.

The printed circuit board 26 may be potted in the electronics housing 24, for example by the interior 56 being at least partially filled with a potting material (not shown in the figures).

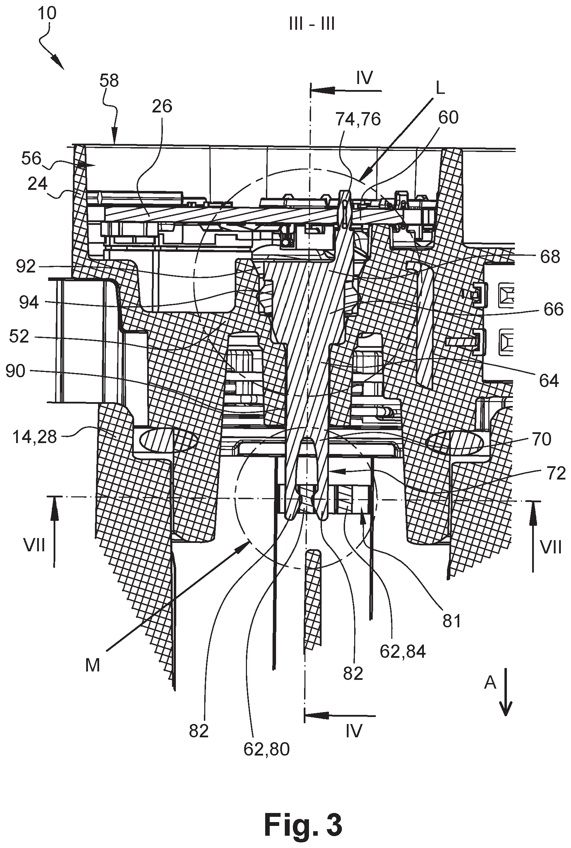

In order to reduce electromagnetic interference fields generated in the system as a whole by the printed circuit board 26 during operation and thus improve the electromagnetic compatibility of the fluid pump 10, the printed circuit board 26 has an earth conductor having an earthing contact 60 (see Figure 3), by way of which the printed circuit board 26 is electrically conductively connected to the stator 62 of the stator module 40 by means of an earth contact 64.

For example, the earth contact 64 is in this way electrically conductively connected to a filter circuit for reducing the electromagnetic interference fields, said filter circuit being part of the printed circuit board 26.

The earth contact 64 has a press-in section 66 having a thrust bearing section 68 and a section 70 assigned to the stator 62 and having a fork-shaped axial end 72.

At the opposite axial end 74, the earth contact 64 has a press-in contact 76 which is provided on the thrust bearing section 68 or is directly connected thereto.

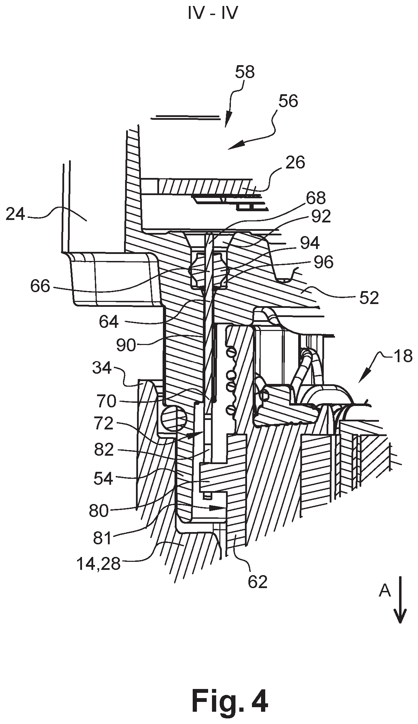

In the embodiment illustrated, the earth contact 64 is of plate-shaped design (see Figure 4), for example as a sheet-metal punched part.

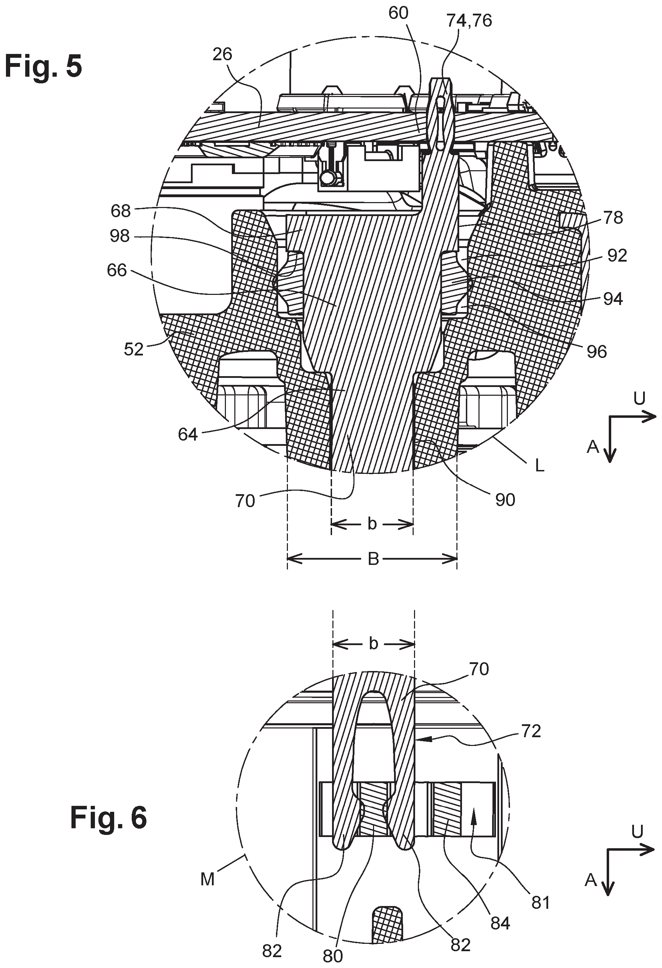

The press-in section 66 has a width B (see Figure 5) in the circumferential direction U which is twice as large as the width b of the section 70 assigned to the stator 62.

In an alternative embodiment, the width B is between 190% and 210% of the width b.

In principle, the press-in section 66 and the section 70 assigned to the stator 62 may each be of any desired width, that is to say the width B may be any desired multiple of the width b.

Furthermore, the press-in contact 76 is provided on a side edge 78 of the thrust bearing section 68 or extends away from the latter counter to the axial direction A.

At the axial end 74, the earth contact 64 is pressed into the earthing contact 60 counter to the axial direction A and is thus connected to the printed circuit board 26 in a force-fitting and form-fitting manner.

At the fork-shaped axial end 72 (see Figure 6), the earth contact 64 is connected to the stator 62 via a contact lug 80 which is arranged on an outer side 81 of the stator 62.

For this purpose, the fork-shaped axial end 72 has two contact limbs 82 which clamp around the contact lug 80 on sides opposite in the circumferential direction U.

In the embodiment illustrated, a second contact lug 84 is provided, which is arranged next to the first contact lug 80 in the circumferential direction U and via which, in an alternative embodiment, the earth contact 64 can be electrically conductively connected to the stator 62 via the fork-shaped axial end 72.

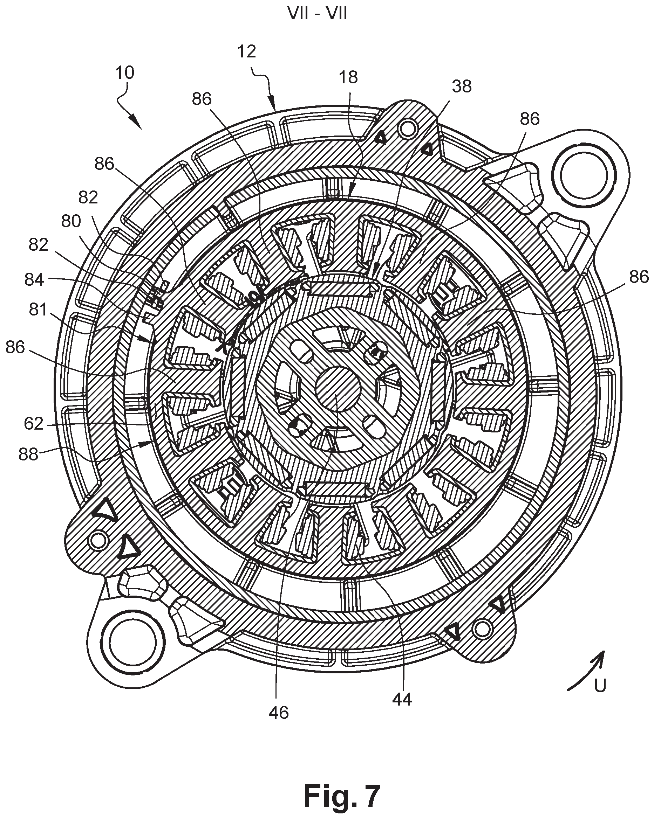

In this context, the contact lugs 80, 84 are formed in one piece with stator laminations 86 (see Figure 7) which form the core 88 of the stator 62.

In order to electrically conductively connect the earth contact 64 to the stator 62 during assembly, the earth contact 64 is pushed with the fork-shaped axial end 72 onto the contact lug 80 in the axial direction A.

As shown in Figure 3, the earth contact 64 extends in the axial direction A through a feedthrough 90 in the base 52 and thus through the electronics housing 24.

In this case, the feedthrough 90 forms a receptacle 92 (see Figure 5), in which the press-in section 66 is accommodated in the base 52.

A seal 94 is arranged in the receptacle 92 and seals an intermediate space 96 between the base 52 and the earth contact 64.

The seal 94 extends in the circumferential direction U around the press-in section 66 and bears against the thrust bearing section 68 at an axial end face 98 thereof.

In an alternative embodiment, the earth contact 64 is injection-moulded into the base 52 and in this way fastened in a form-fitting manner to the electronics housing 24.

In both cases, the base 52 forms a barrier which separates the interior 56 of the electronics housing 24 in a fluid-tight manner from the interior space 16 of the motor housing 14.

In this way, a fluid pump 10 which is of simple design and has good electromagnetic compatibility is provided.

## Claims

1. Fluid pump (10) having a motor housing (14), in which a stator (62) is accommodated, and having an electronics housing (24), in which a printed circuit board (26) is accommodated, said printed circuit board being used to actuate stator windings (44) of the stator (62), wherein the electronics housing (24) has a base (52) on the side facing the stator (62), wherein the base (52) has a receptacle (92) for an earth contact (64) which is connected on one side to an earth conductor on the printed circuit board (26) and on the other side is pushed onto a contact lug (80) provided on the outer side (81) of the stator (62).

2. Fluid pump (10) according to Claim 1, **characterized in that** the contact lug (80) is formed in one piece with stator laminations (86) which form the core (88) of the stator (62).

3. Fluid pump (10) according to Claim 1 or 2, **characterized in that** two contact lugs (80, 84) arranged next to one another are provided and the earth contact (64) engages on one of the two contact lugs (80, 84).

4. Fluid pump (10) according to any one of the preceding claims, **characterized in that** the side of the earth contact (64) assigned to the stator (62) is of fork-shaped design with two contact limbs (82) which engage on opposite sides of the contact lug (80).

5. Fluid pump (10) according to any one of the preceding claims, **characterized in that** the earth contact (64) has a press-in section (66) which is accommodated in the base (52) of the electronics housing (24).

6. Fluid pump (10) according to Claim 5, **characterized in that** the press-in section (66) is approximately twice as wide as the section (70) of the earth contact (64) assigned to the stator (62).

7. Fluid pump (10) according to Claim 5 or 6, **characterized in that** a thrust bearing section (68) is provided on the press-in section (66) and **in that** a press-in contact (76) which is accommodated in the printed circuit board (26) is arranged on the thrust bearing section (68).

8. Fluid pump (10) according to Claim 7, **characterized in that** a seal (94) is arranged around the press-in section (66) and bears against the thrust bearing section (68).

9. Fluid pump (10) according to Claim 7 or 8, **characterized in that** the press-in contact (76) is arranged on a side edge (78) of the thrust bearing section (68).

10. Fluid pump (10) according to any one of the preceding claims, **characterized in that** the electronics housing (24) is potted.
